# EUROPEAN PATENT APPLICATION

(11) **EP 2 505 728 A2**
(43) Date of publication of application: **03.10.2012**
(21) Application number: 12162432.4
(22) Date of filing: 30.03.2012
(51) Int. Cl.: E03D 9/08, E03C 1/10

(54) **Water storage tank and bidet having the same**

(30) Priority: 31.03.2011 KR 20110029925
(71) Applicant: Woongjin Coway Co., Ltd., Choongcheongnam-do 314-895 (KR)
(72) Inventor: Yun, Young Sang, 151-851 SEOUL (KR); Park, Man Uk, 151-851 SEOUL (KR)
(74) Representative: Larcher, Dominique

(57) **Abstract**

A water storage tank (100) in which an inlet (221) allowing water to flow therethrough and a level of water stored in the water storage tank are maintained to have a certain interval therebetween to thus prevent stored water from flowing backwards through the inlet, and a bidet having the same are provided.

The water storage tank includes: a tank main body (200) having an inlet (221) allowing water to be introduced therethrough and an outlet (222) allowing water to flow out therethrough; and a back flow preventing unit (300) provided in the tank main body and configured to allow the inlet (221) and a water level in the tank main body to have a certain interval (G1) therebetween so that water stored in the tank main body (200) is prevented from flowing backwards through the inlet (221), wherein the inlet (221) is provided in an upper portion of the tank main body (200) to allow water to be introduced into an upper portion of the tank main body, and the outlet (222) is provided on a level below that of the inlet (221) in the tank main body.

## Description

### CROSS-REFERENCE TO RELATED APPLICATIONS

This application claims the priority of Korean Patent Application No. 10-2011-0029925 filed on March 31, 2011, in the Korean Intellectual Property Office, the disclosure of which is incorporated herein by reference.

### BACKGROUND OF THE INVENTION

### Field of the Invention

The present invention relates to a water storage tank into which water to be stored flows and out of which water to be supplied to a user flows and, more particularly, a water storage tank in which an inlet allowing water to flow therethrough and a level of water stored in the water storage tank have a certain interval maintained therebetween, to thus prevent stored water from flowing backwards through the inlet, and a bidet having the same.

### Description of the Related Art

A water storage tank is a device allowing water to flow thereinto, water to be stored therein, and water to flow therefrom to be provided to a user (namely, a device receiving, storing, and providing water to a user).

The water storage tank includes a tank main body storing water, an inlet provided on the tank main body to allow water to be introduced therethrough and connected to a water supply source, and an outlet provided on the tank body to allow water to flow out therethrough.

The related art has a problem in which water stored in the tank main body flows backwards through the inlet to the water supply source. In this case, if water stored in the water storage tank is contaminated, the contaminated water may flow backwards through the inlet to the water supply source to thereby contaminate water of the water supply source.

For example, when the water storage tank is provided in a bidet, the inlet of the water storage tank is connected to a water supply source connected to the bidet and the outlet of the water storage tank is connected to a bidet nozzle movably provided in the bidet and spraying water to a user.

In case in which the bidet is installed in a toilet (i.e., a toilet bowl, a chamber pot, etc.), when a level of water accommodated in the toilet, namely, contaminated water, rises, the contaminated water is introduced into the bidet nozzle. The contaminated water introduced into the bidet nozzle flows backwards into the water storage tank through the outlet connected to the bidet nozzle. Also, the contaminated water introduced into the water storage tank flows backwards through the inlet of the water storage tank to the water supply source to thereby contaminate the water supply source.

Thus, in order to avoid this problem, in the related art, a check valve is provided in the inlet or the outlet of the water storage tank to prevent water from flowing backward. However, when the check valve is damaged, when the pressure of water is temporarily increased, or the like, a back flow of water cannot be prevented permanently.

### SUMMARY OF THE INVENTION

The present invention is based upon recognition of any one of the problems or issues arising from the above-referenced related art water storage tank.

An aspect of the present invention provides a water storage tank in which an inlet allowing water to be introduced therethrough and a level of water stored in the water storage tank have a certain interval maintained therebetween.

Another aspect of the present invention provides a water storage tank in which, when a level of water stored in the water storage tank in which the water level and an inlet have a certain interval maintained therebetween rises to reach a certain level or higher, water is discharged to the outside.

Another aspect of the present invention provides a water storage tank in which stored water is prevented from flowing backwards through an inlet allowing water to be introduced therethrough.

Another aspect of the present invention provides a water storage tank in which, when water stored therein is contaminated, the contaminated water is prevented from flowing backwards through an inlet, thus preventing water of a water supply source connected to the inlet from being contaminated.

According to an aspect of the present invention, there is provided a water storage tank including: a tank main body having an inlet allowing water to be introduced thereto and an outlet allowing water to flow therefrom; and a back flow preventing unit provided in the tank main body and configured to allow the inlet and a water level in the tank main body to have a certain interval therebetween so that water stored in the tank main body is prevented from flowing backwards through the inlet, wherein the inlet is provided in an upper portion of the tank main body to allow water to be introduced into an upper portion of the tank main body, and the outlet is provided on a level below that of the inlet in the tank main body.

The back flow preventing unit may include an overflow member provided within the tank main body such that an upper end portion thereof is spaced apart from the inlet by a certain interval and having an open upper portion to allow water to be introduced thereinto so as to be discharged to the outside when the water level in the tank main body reaches a certain level or higher.

The back flow preventing unit may include an overflow member having an overflow hole formed to be spaced apart from the inlet by a certain interval, wherein when the water level in the tank main body reaches a certain level or higher, water is introduced into the overflow hole so as to be discharged to the outside.

The water storage tank may further include: a flow guide member associated with the inlet within the tank main body to allow water introduced through the inlet to flow to a lower portion of the tank main body to be filled to an upper portion from the lower portion of the tank main body.

The flow guide member may be disposed below the inlet such that an upper end portion thereof is higher than an upper end portion of the overflow member included in the back flow preventing unit and spaced apart from the inlet by a certain interval, and a lower portion of the flow guide member may be positioned to be spaced apart from the bottom of the tank main body by a certain interval or to have a through hole allowing water to pass therethrough.

An upper portion of the flow guide member may be connected to the inlet, and a lower portion of the flow guide member may be positioned to be spaced apart from the bottom of the tank main body by a certain interval or to have a through hole allowing water to pass therethrough.

The flow guide member may be connected to the overflow hole formed on the overflow member included in the back flow preventing unit.

The outlet may be disposed at an upper portion of the tank main body, lower than an upper end portion of the overflow member included in the back flow preventing unit or lower than the overflow hole formed in the overflow member.

The water storage tank may further include: a heater provided in the tank main body to heat water stored in the tank main body.

The heater may be provided in a lower portion in the tank main body.

The tank main body may include: a lower member having a portion of the back flow preventing unit; and an upper member having another portion of the back flow preventing unit air-tightly connected to a portion of the back flow preventing unit and including the inlet and the outlet.

According to another aspect of the present invention, there is provided a bidet including: a bidet main body; the foregoing water storage tank provided in the bidet main body such that an inlet thereof through which water is introduced is connected to a water supply source connected to the bidet main body; and a bidet nozzle movably provided in the bidet main body and connected to an outlet provided in the water storage tank to jet water stored in the water storage tank.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a cut perspective view of a water storage tank according to an embodiment of the present invention.
FIG. 2 is a cut perspective view of a water storage tank according to another embodiment of the present invention.
FIG. 3 is a view showing an operation of the water storage tank according to an embodiment of the present invention.
FIG. 4 is a view showing an operation of the water storage tank according to another embodiment of the present invention.

### DETAILED DESCRIPTION OF THE PREFERRED EMBODIMENT

In order to help understand the characteristics of the present invention, a water storage tank and a bidet having the same in relation to an embodiment of the present invention will be described in detail hereinafter.

Embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions of elements may be exaggerated for clarity, and the same reference numerals will be used throughout to designate the same or like components.

Embodiments of the present invention are based on having (securing, maintaining) a certain interval (or space) between an inlet through which water is introduced and a water level of a water storage tank such that water stored in the water storage tank is prevented from flowing backwards through the inlet.

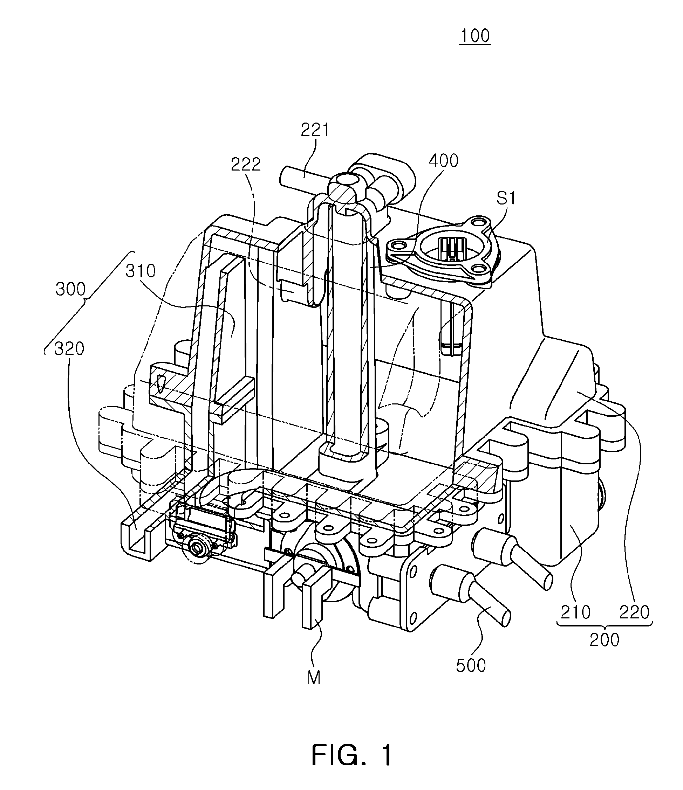

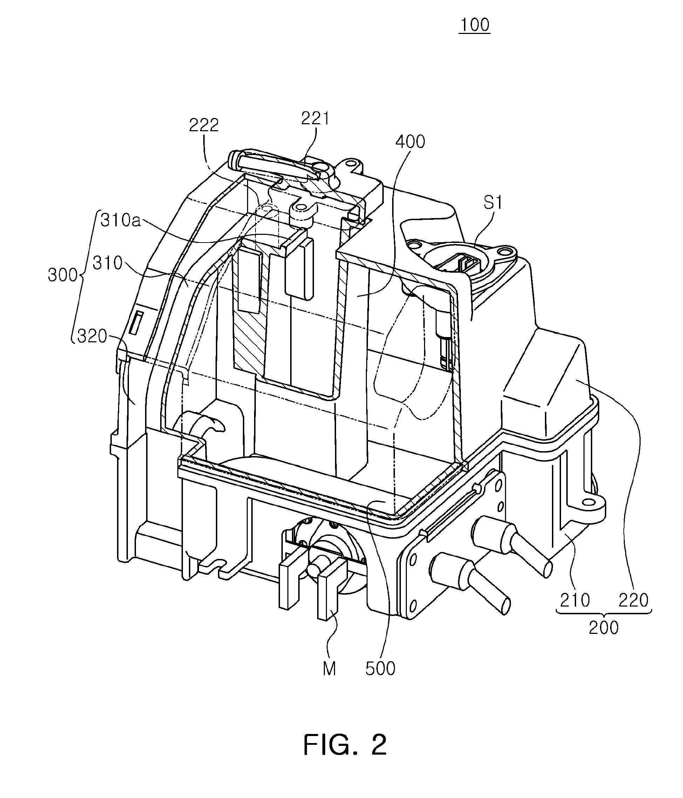

As shown in the embodiment illustrated in FIGS. 1 and 2, a water storage tank 100 may include a tank main body 200 and a back flow preventing unit 300.

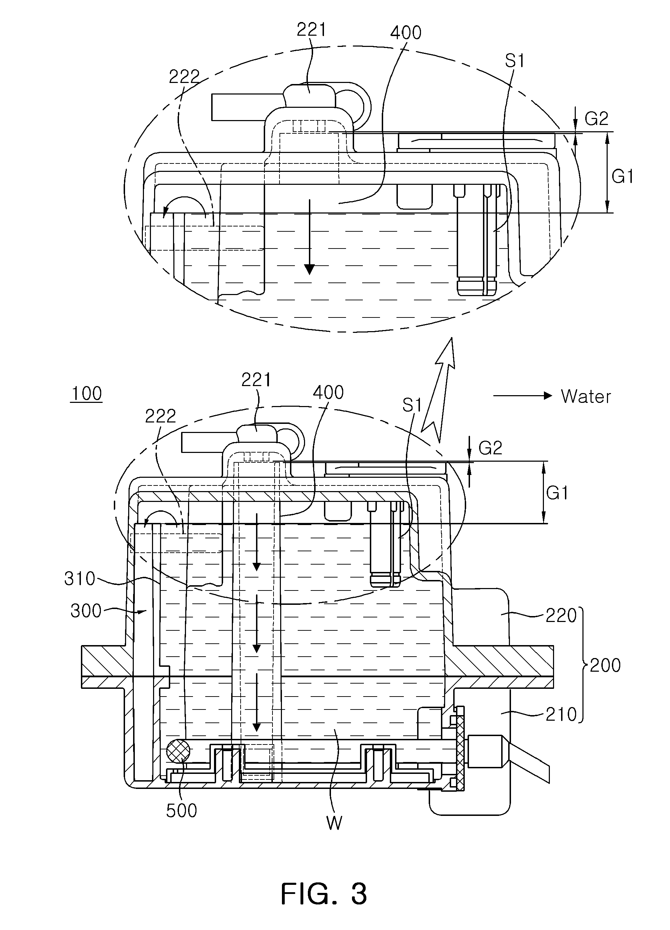

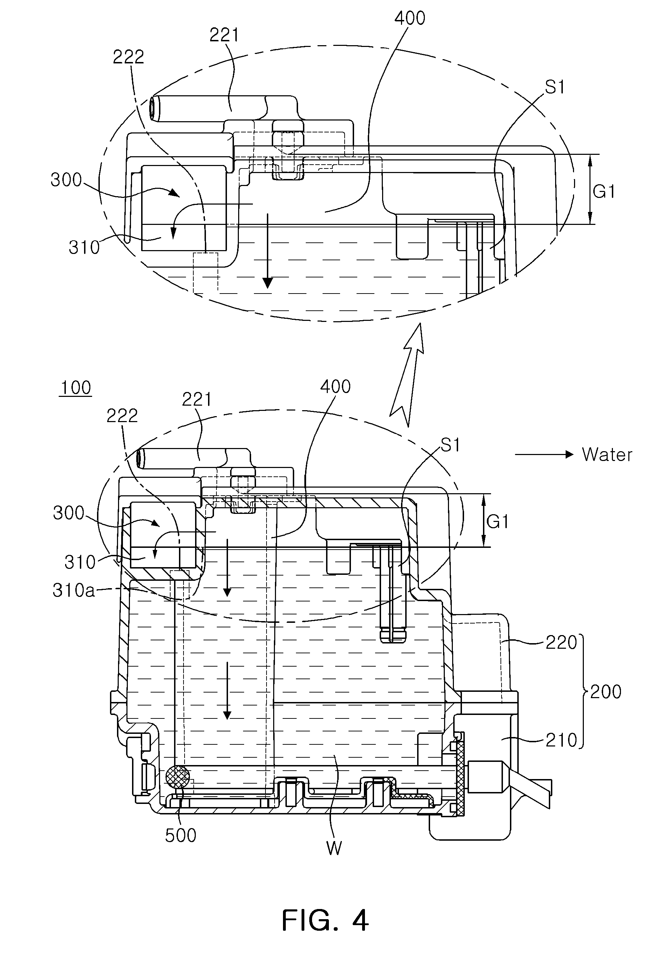

As shown in the embodiment illustrated in FIGS. 1 and 2, the tank main body 200 may include an inlet 221 and an outlet 222. The inlet 221 may be connected to a water supply source (not shown). For example, when the water storage tank 100 according to an embodiment of the present invention is provided in a bidet (not shown), the inlet 221 may be connected to a water supply source connected to the bidet. Thus, water W stored in the water supply source may be introduced into the tank main body 200 through the inlet 221 as illustrated in FIGS. 3 and 4.

Also, the outlet 222 may be connected to a water discharge member (not shown). For example, as mentioned above, when the water storage tank 100 is provided in the bidet, the outlet 222 may be connected to a bidet nozzle (not shown) movably provided in the bidet. Thus, water stored in the tank main body 200 flows out through the outlet 222 and is discharged to the outside through the water discharge member such as the foregoing bidet nozzle, or the like.

As shown in the embodiment illustrated in FIGS. 1 and 2, the inlet 221 may be provided on an upper portion of the tank main body 200. Thus, as shown in FIGS. 3 and 4, water W can be introduced into the tank main body 200 from the upper portion of the tank main body 200.

Also, as shown in the embodiment illustrated in FIGS. 1 and 2, the outlet 222 may be disposed at an upper portion of the tank main body 200, lower than an upper end portion of an overflow member 310 included in the back flow preventing unit 300 (to be described) and lower than an overflow hole 310a formed in the overflow member 310.

Thus, water W stored in the tank main body 200 may flow to the outside through the outlet 222 from an upper portion of the tank main body 200. Accordingly, as explained hereinafter, when a heater 500 is provided in the tank main body 200, water W stored in the tank main body 200 having a relatively high temperature, starting from the upper portion, can flow to the outside through the outlet 222.

As shown in the embodiment illustrated in FIGS. 1 and 2, the tank main body 200 may include a lower member 210 and an upper member 220. The lower member 210 may include a portion of the back flow preventing unit 300 (to be described) as shown in the illustrated embodiment. The upper member 220 may include another portion of the overflow unit 300 air-tightly connected to one portion of the overflow unit 300 provided in the lower member 210. Also, the upper member 220 may include the foregoing inlet 221 and the outlet 222. With this configuration, the tank main body 200 can be easily fabricated.

As shown in the embodiment illustrated in FIGS. 1 and 2, the back flow preventing unit 300 may be provided in the tank main body 200. As shown in FIGS. 3 and 4, in order to prevent water W stored in the tank main body 200 from flowing backwards through the inlet 210, it may be configured such that the inlet 210 and a water level in the tank main body 200 have a certain interval (or a certain gap) G1 maintained therebetween.

To this end, as shown in the embodiment illustrated in FIGS. 1 and 2, the overflow unit 300 may include an overflow member 310.

In the case of the embodiment illustrated in FIG 1, the overflow member 310 may be provided within the tank main body 200 such that an upper end portion thereof is spaced apart by the certain interval G1 from the inlet 221 as shown in FIG 3. And, the upper portion of the overflow member 310 may be open. Thus, as shown in FIG 3, when a water level in the tank main body 200 rises to reach a certain water level or higher, namely, rises to be higher than the upper end portion of the overflow member 310, water W in the tank main body 200 is introduced into the opened upper end portion of the overflow member 310 and then discharged to the outside. To this end, the overflow member 310 may include a discharge hole 320 as shown in the illustrated embodiment.

For example, in case in which a flow rate of water W introduced through the inlet 221 is greater than that of water W discharged through the outlet 222 so the water level in the tank main body 200 continues to rise, when the water level in the tank main body 200 reaches a level higher than the upper end portion of the overflow member 310, water W in the tank main body 200 may be introduced into the opened upper end portion of the overflow member 310.

Accordingly, the water level in the tank main body 200 is not higher than the upper end portion of the overflow member 310 all the time. Therefore, water W in the tank main body 200 is prevented from flowing backwards through the inlet 221.

Thus, even if water W in the tank main body 200 is contaminated by, for example, a contaminant introduced through the outlet 222, since the contaminated water W in the tank main body 200 is prevented from flowing backwards through the inlet 221, water of the water supply source connected to the inlet 221 cannot be contaminated.

Meanwhile, in the embodiment illustrated in FIG 2, the overflow member 310 may have the overflow hole 310a formed to be spaced apart from the inlet 221 by a certain interval (or a certain gap) G1, as shown in FIG 4. Accordingly, when the water level in the tank main body 200 rises to reach a certain water level or higher, i.e., higher than a height of the overflow hole 310a, water W in the tank main body 200 may be introduced into the overflow hole 310a of the overflow member 310 and may then be discharged to the outside. To this end, the overflow member 310 may include the discharge hole 320 as shown in the illustrated embodiment.

For example, in case in which a flow rate of water W introduced through the inlet 221 is greater than that of water W discharged through the outlet 222 so the water level in the tank main body 200 continues to rise, when the water level in the tank main body 200 reaches a level higher than the height of the overflow hole 310a of the overflow member 310, water W in the tank main body 200 may be introduced into the overflow hole 310a.

Accordingly, the water level in the tank main body 200 is not higher than the overflow hole 310a of the overflow member 310 all the time. Therefore, water W in the tank main body 200 is prevented from flowing backwards through the inlet 221. Thus, even if water W in the tank main body 200 is contaminated, since the contaminated water W in the tank main body 200 is prevented from flowing backwards through the inlet 221, water of the water supply source connected to the inlet 221 cannot be contaminated.

Also, as shown in the embodiment illustrated in FIGS. 1 and 2, the water storage tank 100 according to an embodiment of the present invention may further include a flow guide member 400. The flow guide member 400 may be provided within the tank main body 200 as shown in the illustrated embodiment. The flow guide member 400 may be associated with the inlet 221 to allow water W introduced through the inlet 221 to flow to the lower portion of the tank main body 200 to be filled to the upper portion from the lower portion of the tank main body 200.

To this end, in the embodiment illustrated in FIG 1, an upper end portion of the flow guide member 400 may be positioned to be higher than the upper end portion of the overflow member 310 and lower than the inlet 221 such that it is spaced apart from the inlet 221 by a certain gap G2, as shown in FIG 3.

A lower portion of the flow guide member 400 may be positioned to be spaced apart from the bottom of the tank main body 200 by a certain interval, as shown in the embodiment illustrated in FIG 1. Also, although not shown, the flow guide member 400 may have a through hole formed on a lower portion thereof to allow water to pass therethrough.

Thus, as shown in FIG 3, water W introduced through the inlet 221 may be introduced into the flow guide member 400. The water W introduced into the flow guide member 400 may flow to the lower portion in the tank main body 200 along the flow guide member 400 and may be introduced to the lower portion in the tank main body 200 through the interval (or space) between the lower portion of the flow guide member 400 and the tank main body 200 or through the through hole formed on the flow guide member 400.

Accordingly, water W may be filled to the upper portion from the lower portion in the tank main body 200. Also, as explained hereafter, when the heater 500 is provided in the tank main body 200, water W introduced through the inlet 221 and having a relatively low temperature may not be mixed with water W stored at the upper portion in the tank main body 200 and having a relatively high temperature. Also, the temperature of the water W placed in the upper portion in the tank main body 200 and having a relatively high temperature may not be lowered. Thus, water W having a temperature desired by a user may flow out through the outlet 222.

Meanwhile, in the embodiment illustrated in FIG 1, the flow guide member 400 may include a guide member (not shown) to guide water, which is discharged to the gap G2 between the inlet 221 and the overflow member 400, to flow into the back flow preventing unit 300, namely, the upper end portion of the overflow member 310, in case in which water W at a flow rate greater than that of water which can be introduced into the tank main body 200 through the flow guide member 400 is introduced into the flow guide member 400.

Thus, as explained hereafter, when the heater 500 is provided in the tank main body 200, water W introduced through the inlet 221 and having a relatively low temperature may not be mixed with water W stored at the upper portion in the tank main body 200 and having a relatively high temperature. Also, the temperature of the water W placed at the upper portion in the tank main body 200 and having a relatively high temperature may not be lowered. Thus, water W having a temperature desired by a user may flow out through the outlet 222.

In the embodiment illustrated in FIG 2, the upper portion of the flow guide member 400 may be connected to the inlet 221. Also, as shown in the illustrated embodiment, the lower portion of the flow guide member 400 may be spaced apart from the bottom of the tank main body 200 by a certain interval or may have a through hole allowing water W to pass therethrough.

Thus, as shown in FIG 4, water W introduced through the inlet 221 may be introduced into the flow guide member 400. The water W introduced into the flow guide member 400 may flow to the lower portion in the tank main body 200 along the flow guide member 400 and may be introduced to the lower portion in the tank main body 200 through the interval (or space) between the lower portion of the flow guide member 400 and the tank main body 200 or through the through hole formed on the flow guide member 400.

Accordingly, water W may be filled to the upper portion from the lower portion in the tank main body 200. Also, as explained hereafter, when the heater 500 is provided in the tank main body 200, water W introduced through the inlet 221 and having a relatively low temperature may not be mixed with water W stored at the upper portion in the tank main body 200 and having a relatively high temperature. Also, the temperature of the water W placed at the upper portion in the tank main body 200 and having a relatively high temperature may not be lowered. Thus, water W having a temperature desired by a user may flow out through the outlet 222.

Meanwhile, in the embodiment illustrated in FIG 2, the flow guide member 400 may be connected to the overflow hole 310a of the back flow preventing member 310. Thus, when water W is introduced into the flow guide member 400 at a flow rate greater than that of water which can be introduced into the tank main body 200 through the flow guide member 400, water W can be introduced into the overflow hole 310a so as to be discharged to the outside.

Thus, as explained hereafter, when the heater 500 is provided in the tank main body 200, water W introduced through the inlet 221 and having a relatively low temperature may not be mixed with water W stored at the upper portion in the tank main body 200 and having a relatively high temperature. Also, the temperature of the water W placed in the upper portion in the tank main body 200 and having a relatively high temperature may not be lowered. Thus, water W having a temperature desired by a user may flow out through the outlet 222.

As shown in the embodiment illustrated in FIGS. 1 and 2, the water storage tank 100 may further include the heater 500. As shown in the illustrated embodiment, the heater 500 may be provided within the tank main body 200. However, the present invention is not limited thereto and the heater 500 may be provided on an outer side of the tank main body 200. Water W stored in the tank main body 200 may be heated by the heater 500. Thus, hot water can be provided to a user.

Meanwhile, as shown in the embodiment illustrated in FIGS. 1 and 2, the water storage tank 100 according to an embodiment of the present invention may include a water level sensor S1, a bimetal M, and the like.

A bidet (not shown) according to an embodiment of the present invention may include a bidet main body (not shown), the foregoing water storage tank 100, and a bidet nozzle (not shown).

The bidet main body may be installed in a toilet (i.e., a toilet bowl, a chamber pot, etc.) (not shown). A water supply source may be connected to the bidet main body.

The foregoing water storage tank 100 may be provided in the bidet main body. The inlet 221 of the water storage tank 100 may be connected to the water supply source connected to the bidet main body. Thus, water W from the water supply source may be introduced into the tank main body of the water storage tank 100 through the inlet 221 so as to be stored therein.

The bidet nozzle may be movably provided in the bidet main body. The bidet nozzle may be connected to the outlet 222 of the water storage tank 100. Thus, water W stored in the water storage tank 100 may be jetted through the bidet nozzle. Namely, when a user sits on the toilet bowl, relieves him or herself (answers the call of nature), and operates the bidet nozzle, water W from the water storage tank 100 may be jetted to the private parts of the user through the bidet nozzle to cleanse the private parts.

Also, even if the level of water placed in the toilet bowl rises so that water placed in the toilet bowl is introduced into the bidet nozzle and introduced into the water storage tank 100 through the outlet 222, namely, even if the water W in the water storage tank 100 is contaminated, the water W in the water storage tank 100 may not flow backwards to the inlet 221 as mentioned above. Thus, water of the water supply source connected to the water storage tank 100 may not be contaminated.

As set forth above, in the water storage tank and the bidet having the same according to embodiments of the invention, the inlet through which water is introduced and the level of water in the water storage tank can have a certain interval maintained therebetween.

Also, when a level of water stored in the water storage tank and maintained to have a certain interval from the inlet rises to reach a certain level or higher, water can be discharged to the outside.

In addition, water stored in the water storage tank is prevented from flowing backwards through the inlet serving to allow water to be introduced therethrough.

Moreover, when water stored in the water storage tank is contaminated, the contaminated water is prevented from flowing backwards through the inlet, thus preventing water of a water supply source connected to the inlet from being contaminated.

As for the water storage tank and the bidet having the same as described above, the configuration of the foregoing embodiment is not limitedly applied but the entirety or a portion of the respective embodiments may be selectively combined to be configured into various modifications.

While the present invention has been shown and described in connection with the embodiments, it will be apparent to those skilled in the art that modifications and variations can be made without departing from the spirit and scope of the invention as defined by the appended claims.

## Claims

1. A water storage tank comprising:
a tank main body having an inlet allowing water to be introduced thereto and an outlet allowing water to flow therefrom; and
a back flow preventing unit provided in the tank main body and configured to allow the inlet and a water level in the tank main body to have a certain interval therebetween so that water stored in the tank main body is prevented from flowing backwards through the inlet,
wherein the inlet is provided in an upper portion of the tank main body to allow water to be introduced into an upper portion of the tank main body, and the outlet is provided on a level below that of the inlet in the tank main body.

2. The water storage tank of claim 1, wherein the back flow preventing unit includes an overflow member provided within the tank main body such that an upper end portion thereof is spaced apart from the inlet by a certain interval and having an open upper portion to allow water to be introduced thereinto so as to be discharged to the outside when the water level in the tank main body reaches a certain level or higher.

3. The water storage tank of claim 1, wherein the back flow preventing unit includes an overflow member having an overflow hole formed to be spaced apart from the inlet by a certain interval, wherein when the water level in the tank main body reaches a certain level or higher, water is introduced into the overflow hole so as to be discharged to the outside.

4. The water storage tank of claim 1, further comprising a flow guide member associated with the inlet within the tank main body to allow water introduced through the inlet to flow to a lower portion of the tank main body to be filled to an upper portion from the lower portion of the tank main body.

5. The water storage tank of claim 4, wherein the flow guide member is disposed below the inlet such that an upper end portion thereof is higher than an upper end portion of the overflow member included in the back flow preventing unit and spaced apart from the inlet by a certain interval, and a lower portion of the flow guide member is positioned to be spaced apart from the bottom of the tank main body by a certain interval or to have a through hole allowing water to pass therethrough.

6. The water storage tank of claim 4, wherein an upper portion of the flow guide member is connected to the inlet, and a lower portion of the flow guide member is positioned to be spaced apart from the bottom of the tank main body by a certain interval or to have a through hole allowing water to pass therethrough.

7. The water storage tank of claim 4, wherein the flow guide member is connected to the overflow hole formed on the overflow member included in the back flow preventing unit.

8. The water storage tank of claim 1, wherein the outlet is disposed at an upper portion of the tank main body, lower than an upper end portion of the overflow member included in the back flow preventing unit or lower than the overflow hole formed in the overflow member.

9. The water storage tank of claim 1, further comprising a heater provided in the tank main body to heat water stored in the tank main body.

10. The water storage tank of claim 9, wherein the heater is provided in a lower portion in the tank main body.

11. The water storage tank of claim 1, wherein the tank main body comprises:
a lower member having a portion of the back flow preventing unit; and
an upper member having another portion of the back flow preventing unit air-tightly connected to a portion of the back flow preventing unit and including the inlet and the outlet.

12. A bidet comprising:
a bidet main body;
a water storage tank, of any one of claim 1 to claim 11, provided in the bidet main body such that an inlet thereof through which water is introduced is connected to a water supply source connected to the bidet main body; and
a bidet nozzle movably provided in the bidet main body and connected to an outlet provided in the water storage tank to jet water stored in the water storage tank.
